# EUROPEAN PATENT APPLICATION

(11) **EP 4 817 694 A2**
(43) Date of publication of application: **07.10.2026**
(21) Application number: 26199816.5
(22) Date of filing: 15.07.2024
(51) Int. Cl.: A63B 26/00

(54) **FIXING SET**

(30) Priority: 12.10.2023 CN 202311326313; 21.12.2023 CN 202323493137 U; 22.12.2023 CN 202323528681 U; 09.01.2024 CN 202420048001 U; 19.03.2024 CN 202420539540 U; 26.04.2024 CN 202420890130 U; 05.06.2024 CN 202421277069 U; 06.06.2024 CN 202421292866 U
(62) Document number(s) of the earlier application(s) in accordance with Art. 76 EPC: 24806704.3 / 4 714 509
(71) Applicant: Beyond Power Inc., Shenzhen, Guangdong 518114 (CN)
(72) Inventor: ZHOU, Changxing, Shenzhen, 518114 (CN); HUANG, Sirong, Shenzhen, 518114 (CN); CHEN, Juncheng, Shenzhen, 518114 (CN); PAN, Hongtao, Shenzhen, 518114 (CN); ZUO, Qianbin, Shenzhen, 518114 (CN); LIANG, Junjie, Shenzhen, 518114 (CN); CAI, Xing, Shenzhen, 518114 (CN); LAN, Qiu, Shenzhen, 518114 (CN); HE, Jinheng, Shenzhen, 518114 (CN); CHANG, Wenxin, Shenzhen, 518114 (CN)
(74) Representative: De Arpe Tejero, Manuel

(57) **Abstract**

A fixing member is provided. The fixing member includes two fixing frames (f100) and two adjusting links (f200). Each of the two fixing frames (f100) is formed with two fixing planes (f101) oriented at an angle, and the two fixing planes (f101) are located on a side of the fixing frame (f100) adjacent to the other fixing frame (f100). The length of each of the two adjusting links (f200) is adjustable. When the fixing member is fastened, the fixing frames (f100) and the adjusting links (f200) are alternately hinged to form an annular structure (f102).

## Description

### TECHNICAL FIELD

The present disclosure relates to the technical field of fitness device accessories, and in particular, to a fixing member.

### BACKGROUND

When a fitness device is in use, a user interacts with the fitness device, utilizing the power of the fitness device or overcoming the resistance of the fitness device to perform exercise. In the related art, the fitness device usually needs to be fixed. The fixation of the device in the related art is relatively rigid, requiring a base to be provided for the fitness device, or the fitness device to be fixed on a dedicated gantry.

However, any mounting method can only accommodate a single mounting scenario or a limited number of mounting scenarios. For example, the installation of a gantry can be performed only within a frame of the gantry and cannot be performed away from the gantry. The installation expansion of the fitness device is limited and does not meet the increasingly diverse fitness needs of users.

### SUMMARY OF THE INVENTION

The present disclosure provides a fixing member that can adapt to increasingly diverse fitness needs of users.

A fixing member according to an embodiment of the present disclosure includes two fixing frames and two adjusting links. Each of the two fixing frames is formed with two fixing planes oriented at an angle, and the two fixing planes are located on a side of the fixing frame adjacent to the other fixing frame. The length of each of the two adjusting links is adjustable. When the fixing member is fastened, the fixing frames and the adjusting links are alternately hinged to form an annular structure.

Additional aspects and advantages of the present disclosure will be partly given in the following description, and will partly become apparent from the following description, or will be learned through the practice of the present disclosure.

### BRIEF DESCRIPTION OF THE DRAWINGS

The above and/or additional aspects and advantages of the present disclosure will become apparent and easily understood from the description of the embodiments in conjunction with the following accompanying drawings.
FIG. 1 is a schematic structural diagram of a fixing member according to an embodiment of the present disclosure.
FIG. 2 is a schematic diagram of a fixing member fixed to a large-sized frame according to an embodiment of the present disclosure.
FIG. 3 is a schematic diagram of a fixing member fixed to a small-sized frame according to an embodiment of the present disclosure.
FIG. 4 is a schematic diagram of a fixing member fixed to a non-square rectangular frame according to an embodiment of the present disclosure.
FIG. 5 is a schematic diagram of a quick-release structure (fastening structure) according to an embodiment of the present disclosure.
FIG. 6 is a schematic structural diagram of a gasket and a quick-release cam according to an embodiment of the present disclosure.
FIG. 7 is a schematic structural diagram of a gasket according to an embodiment of the present disclosure.
FIG. 8 is a schematic structural diagram of an adjusting link according to an embodiment of the present disclosure.
FIG. 9 is a schematic structural diagram of a fixing frame according to an embodiment of the present disclosure.
FIG. 10 is another schematic structural diagram of a fixing frame according to an embodiment of the present disclosure.
FIG. 11 is a schematic structural diagram of a temporary fastening assembly according to an embodiment of the present disclosure.
FIG. 12 is a schematic diagram of an internal structure of a temporary fastening assembly according to an embodiment of the present disclosure.
FIG. 13 is a reference schematic diagram of a first state of a fixing member when in use according to an embodiment of the present disclosure.
FIG. 14 is a reference schematic diagram of a second state of a fixing member when in use according to an embodiment of the present disclosure.
FIG. 15 is a reference schematic diagram of a third state of a fixing member when in use according to an embodiment of the present disclosure.

### DETAILED DESCRIPTION OF EMBODIMENTS

Embodiments of the present disclosure are described in detail below, and examples of the embodiments are shown in accompanying drawings, wherein the same or similar reference numerals represent the same or similar elements or elements having the same or similar functions. The embodiments described below with reference to the accompanying drawings are illustrative and are intended to explain the present disclosure and should not be construed as limiting the present disclosure.

In the description of the present disclosure, it should be understood that terms such as "center", "longitudinal", "transverse/lateral", "length", "width", "thickness", "up", "down", "front", "back", "left", "right", "vertical", "horizontal", "top", "bottom", "inner", "outer", "clockwise", "counterclockwise", etc., indicate orientations or positional relationships based on orientations or positional relationships shown in the accompanying drawings. These terms are used only for the convenience of describing the present disclosure and simplifying the description, and are not intended to indicate or imply that an apparatus or an element must have a specific orientation, be constructed and operated in a specific orientation, and therefore should not be construed as limiting the present disclosure. Additionally, terms such as "first" and "second" are used for descriptive purposes only and should not be construed as indicating or implying relative importance or implicitly indicating the number of technical features. Thus, features defined by "first" and "second" may explicitly or implicitly include one or more of the features. In the description of the present disclosure, the term "plurality of" means two or more, unless otherwise clearly and specifically defined.

In the description of the present disclosure, it should be noted that unless otherwise defined explicitly and specifically, terms such as "mount", "couple", "connect" should be understood broadly. For example, they may be a fixed connection, a detachable connection, or an integral connection; or may be a mechanical connection, an electrical connection, or mutual communication; or may be a direct connection or an indirect connection through an intermediate media, or may be an internal connection of two elements or an interaction relationship between two elements. For those having ordinary skill in the art, specific meanings of the foregoing terms in the present disclosure may be understood according to specific situations.

In the present disclosure, unless otherwise defined explicitly and specifically, a first feature being "above" or "below" a second feature may include the first feature and the second feature being in direct contact, or may include the first and second features not being in direct contact but being in contact through an additional feature between them. Moreover, a first feature being "above", "upward", and "on" a second feature may include the first feature being directly above and obliquely above the second feature, or may only indicate that the first feature has a higher horizontal height than the second feature. A first feature being "below", "beneath" and "underneath" the second feature includes the first feature being directly below and obliquely below the second feature, or only indicates that the first feature has a smaller horizontal height than the second feature.

The following disclosure provides many different embodiments or examples to implement different structures of the present disclosure. To simplify the disclosure of the present disclosure, components and arrangements of specific embodiments are described below. Of course, these are only examples and are not intended to limit the present disclosure. Additionally, the present disclosure may repeat reference numerals and/or reference letters in different embodiments for the purpose of simplicity and clarity, which does not indicate a relationship between the various embodiments and/or arrangements discussed. Furthermore, the present disclosure provides embodiments of various specific processes and materials, but those having ordinary skill in the art may be aware of the application of other processes and/or the use of other materials.

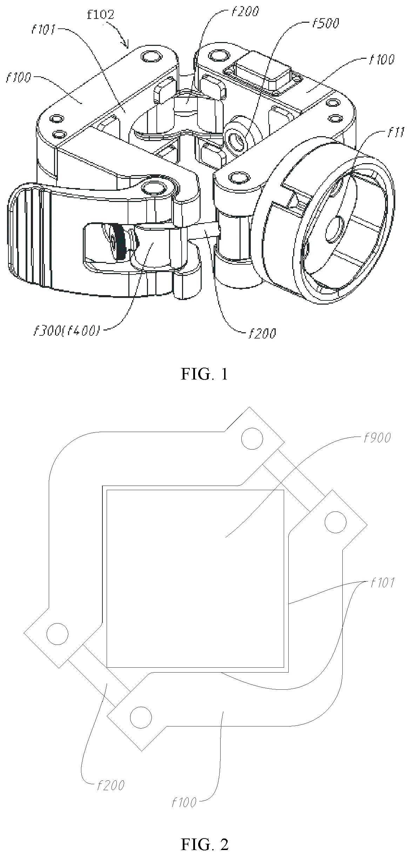

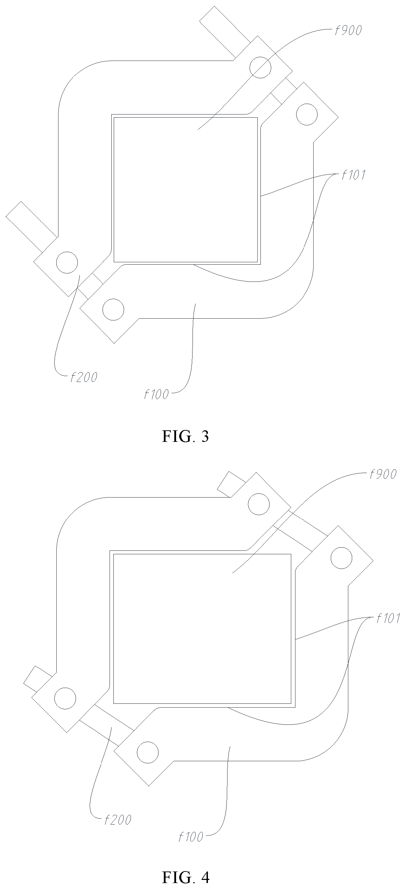

Referring to FIG. 1, the present disclosure discloses a fixing member. It should be noted that the fixing member in these embodiments can be fixed to a column in an external environment and can also be fixed to a specified column provided by another fixing member, and at least includes two fixing frames f100 and two adjusting links f200. When the fixing member is fastened, the fixing frames f100 and the adjusting links f200 are alternately hinged to form an annular structure f102. The fixing frame f100 is formed with two fixing planes f101 oriented at an angle, and the two fixing planes f101 are located on a side of the fixing frame f100 adjacent to the other fixing frame f100. The length of the adjusting link f200 is adjustable. When in use, taking the two fixing planes f101 perpendicular to each other and the fixing member fixed to a frame f900 with a rectangular cross-section as an example, by adjusting the length of the adjusting link f200, a distance between the two fixing frames f100 can be adjusted, thereby enabling the fixing member to be fastened to frames f900 with different lengths and widths. For example, by increasing the length of the adjusting link f200, the fixing member can be fixed to a frame f900 with larger length, width and thickness, as shown in FIG. 2. By reducing the length of the adjusting link f200, the fixing member can be fixed to a thinner frame f900 with smaller length and width, as shown in FIG. 3. In addition, when in use, the angle of the fixing frame f100 and the adjusting link f200 can be adjusted to make the two fixing frames f100 offset relative to each other, thereby enabling the fixing member to be fixed to non-square frames f900 with different lengths and width ratios, as shown in FIG. 4. Of course, in the above embodiments, the frame f900 with the two fixing planes f101 perpendicular to each other and a rectangular cross-section is used as an example. In actual application, the angle between the two fixing planes f101 can also be set according to the cross-sectional shape of the fixing frame f100. When a cross-section of the fixing frame f100 is another irregular quadrilateral or another polygon, the angle formed by the fixing planes f101 can be set according to the diagonal angle of the quadrilateral or another polygon, thereby satisfying the adaptation of a plurality of frames f900 with quadrilateral or other polygonal cross-sections of different sizes at the same diagonal angle. That is, the fixing member disclosed in the present disclosure can be applied to a plurality of frames f900 or square columns having quadrilateral or polygonal cross-sections with different side lengths when the diagonal angle is determined. At the same time, the fixing member can also be fixed to another fixing member that provides a column installation environment.

In the fixing member, at least one of a quick-release structure f300 or a fastening structure f400 may also be provided at a hinge of any fixing frame f100 and any adjacent adjusting link f200. By providing the quick-release structure f300, the annular structure f102 formed by the mutual hinge of the fixing frame f100 and the adjusting link f200 can be disconnected at the quick-release structure f300, thereby facilitating the installation of the fixing member on the frame f900, without needing to sleeve the fixing frame f100 from the end of the frame f900 each time during installation. By providing the fastening structure f400, the installation gap of the fixing member can be eliminated, enabling the fixing member to be fastened to the frame f900, further improving the stability of the fixing member. Of course, in the aforementioned solution, even without the fastening structure f400, the fixing member can be fastened by shortening the adjusting link f200. The fastening structure f400 and the quick-release structure can be independently provided at the hinge of the annular structure f102, or can be separately provided to achieve separate technical effects, or can be integrated into one position, so that the structure at this position has both the technical effect of quick connection and disconnection, and the technical effect of fastening when connected.

In a further solution, at least one of an anti-slip pad f140 or an elastic pad f150 is provided on the fixing plane f101. The anti-slip pad f140 can increase friction between the fixing plane f101 and the frame f900, thereby improving the stability of the fixing member on the frame f900. The elastic pad f150 can be squeezed during installation to generate a preloading force and an elastic force, which can increase friction while eliminating the installation gap, and achieve an anti-loosening effect. Similarly, the anti-slip pad f140 and the elastic pad f150 can be used alone to achieve the effect, or be used at the same time to achieve the effect. The elastic anti-slip pad f140 can also be used to achieve both anti-slip and anti-loosening effects.

In a further solution, the fixing frame f100 is also provided with a mounting position or a first coupling seat f11 for coupling to a fitness device, a massage device, or other fixing members. In some embodiments, the mounting component is the first coupling seat f11. The mounting position or the first coupling seat f11 for a specific fitness device is provided on the fixing frame f100, which can make the coupling installation of the fixing member and the fitness device more stable. At the same time, the characteristics of the fixing member can be utilized to enable the specific fitness device to be installed on a plurality of frames f900 of different sizes at the same angle, thereby reducing the cost of installing the specific fitness device and massage device on different frames f900.

In a further solution, a temporary fastening assembly f500 may also be provided in the fixing member. The temporary fastening assembly f500 is provided on an inner side of the annular structure f102, and can apply an inward elastic force or elastically protrude inward, thereby interacting with the frame f900 to generate an elastic force. The elastic force can enhance an interaction force between the fixing member and the frame f900 or between the fixing frame f100 and the frame f900. When the fixing member is unfastened, the interaction force enables the fixing member to remain in place on the frame f900, improving the stability and safety of the fixing member, and preventing the fixing member or the fitness device fixed to the fixing member from slipping down due to gravity when the fixing member is vertically provided on the frame f900, in case the user negligently unfastens the lock without supporting the fixing member or the fitness device.

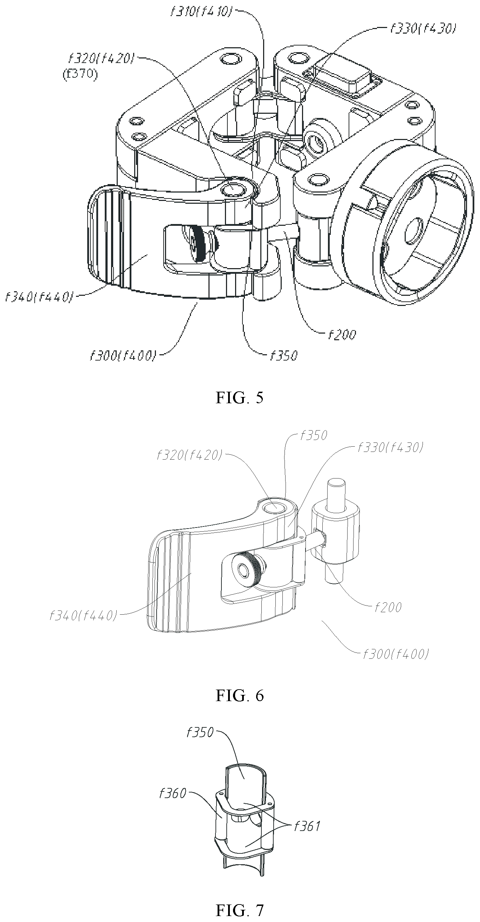

As shown in FIG. 5 and FIG. 6, a quick-release structure f300 in the fixing member is disclosed in an embodiment. The quick-release structure f300 is located at the hinge of any fixing frame f100 and any adjacent adjusting link f200. When the fixing member is not fastened, the adjacent fixing frame f100 and adjusting link f200 provided with the quick-release structure f300 are separable via the quick-release structure f300.

In some embodiments, the specific structure of the quick-release structure f300 may include a quick-release rod f370 connected to the fixing frame f100 or the adjusting link f200. The quick-release rod f370 is connected to a fixing hook f310 provided on the adjusting link f200 or the fixing frame f100. The quick connection of the fixing member is quickly connected through the quick-release rod f370 and the corresponding fixing hook f310, and the structure is simple and the connection is stable.

In some embodiments, the quick-release structure f300 includes a fixing hook f310 and a connecting shaft f320, one of which is provided on the fixing frame f100 and the other is provided on the adjusting link f200. For example, as shown in FIG. 5, the fixing hook f310 is fixed to the fixing frame f100, and the connecting shaft f320 is provided on the adjusting link f200. When connecting, the connecting shaft f320 is configured to be seated on the fixing hook f310 to achieve the connection between the fixing frame f100 and the adjusting link f200. When disassembling, the connecting shaft f320 can be separated from the fixing hook f310. Of course, the fixing hook f310 can also be fixed to the adjusting link f200, and the connecting shaft f320 can be provided on the fixing frame f100, which can be understood and freely replaced by those having ordinary skill in the art.

In a further solution, the quick-release structure f300 also includes a quick-release cam f330 and a rotating handle f340 connected to the quick-release cam f330. The quick-release cam f330 is rotatably disposed on the connecting shaft f320 and is configured to be seated on the fixing hook f310. The radius of the quick-release cam f330 gradually increases along a rotation direction. The quick-release cam f330 is rotatably disposed on the outer side of the connecting shaft f320. When the connecting shaft f320 is seated on the fixing hook f310, the quick-release cam f330 is also seated on the fixing hook f310. At this time, the quick-release cam f330 can be rotated via the rotating handle f340. As the quick-release cam f330 rotates to different angles, the radius of the quick-release cam f330 at the position interacting with the fixing hook f310 will also change, thereby increasing or reducing the gap to achieve fastening and loosening of the connecting structure.

In a further solution, as shown in FIG. 6 and FIG. 7, the quick-release structure f300 further includes a gasket f350. The gasket f350 is located outside the quick-release cam f330 and is floatingly connected to the connecting shaft f320. The provision of the gasket f350 changes the rotational contact between the quick-release cam f330 and the fixing hook f310 into rotational contact between the gasket f350 and the fixing hook f310. On one hand, this can prevent the quick-release cam f330 from wearing the fixing hook f310, and only the gasket f350 needs to be replaced when the gasket f350 is worn. On the other hand, a gasket f350 with a low friction coefficient can be selected to reduce the rotational resistance of the quick-release cam f330. Furthermore, the gasket f350 can be made of copper.

In a further solution, the gasket f350 is connected to a floating frame f360, and the floating frame f360 is provided with a floating hole f361. The connecting shaft f320 passes through the floating hole f361 to realize a floating connection of the gasket f350 to the connecting shaft f320, so that the gasket f350 can be suitable for a quick-release cam f330 whose radius changes with the rotation angle.

As shown in FIG. 5 and FIG. 6, a fastening structure f400 in the fixing member is disclosed in an embodiment. The fastening structure f400 is located at a hinge of any fixing frame f100 and any adjacent adjusting link f200. The fastening structure f400 is configured to eliminate an installation gap of the annular structure f102, which can further improve the stability of the fixing member installed on the frame f900. The fastening structure f400 includes a fixing groove f410 and a fastening shaft f420. For example, as shown in FIG. 5, the fixing groove f410 is provided on the fixing frame f100, the fastening shaft f420 is provided on the adjusting link f200, and a fastening cam f430 is sleeved on the outer side of the fastening shaft f420. The fastening cam f430 is connected to a fastening handle f440. When the fastening handle f440 is rotated, the radius of the fastening cam f430 located in the fixing groove f410 will gradually change along a rotation direction, thereby realizing the adjustment of the fastening and loosening of the annular structure f102.

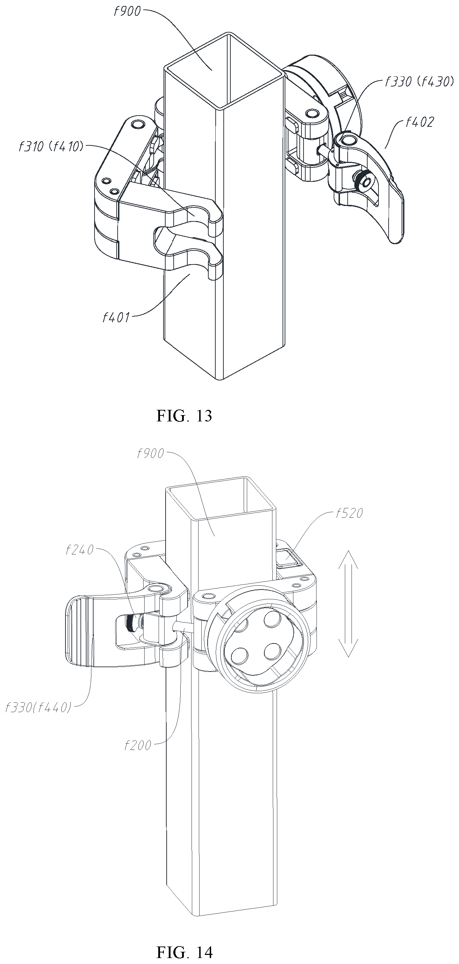

In a further embodiment, as shown in FIG. 13, the fastening structure f400 includes a first part f401 and a second part f402 that are quickly separable, enabling the fastening structure f400 not only to eliminate the installation gap to achieve a fastening effect, but also to disconnect the annular structure f102 at this position to achieve a quick-release function. For example, as shown in FIG. 5, the fastening shaft f420 and the fastening cam f430 can be separated from the fixing groove f410, so as to achieve the separation and quick connection of the two parts.

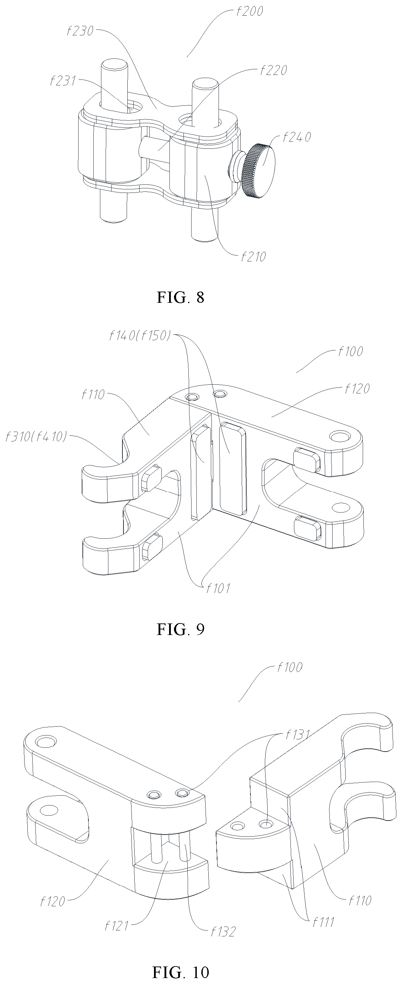

As shown in FIG. 8, an adjusting link f200 of the fixing member is disclosed in an embodiment, including two adjusting shafts f210 respectively rotatably connected to two fixing frames f100, and an adjusting bolt f220 adjustably connected to the two adjusting shafts f210. The adjustable connection further includes the adjusting bolt f220 passing through one adjusting shaft f210 and being threadedly connected to the other adjusting shaft f210. When adjusting the length of the adjusting link f200, it is only necessary to rotate the adjusting bolt f220 to change the threaded connection relationship between the adjusting bolt f220 and the adjusting shaft f210, so as to achieve the change of the distance between the two adjusting shafts f210. The adjustable connection also includes the adjusting bolt f220 passing through the two adjusting shafts f210 in sequence and then being threadedly connected to an adjusting handle f240. The adjusting handle f240 and an end portion of the adjusting bolt f220 can limit the maximum spacing between the two adjusting shafts f210. By rotating the adjusting handle f240, the position of the adjusting handle f240 on the adjusting bolt f220 can be changed, thereby changing the maximum spacing between the two adjusting shafts f210 to achieve the adjustment of the two adjusting shafts f210.

In a further embodiment, a cross-section of the adjusting bolt f220 passing through the adjusting shaft f210 is polygonal, which can prevent the adjusting shaft f210 and the adjusting bolt f220 from rotating relative to each other around an axial direction of the adjusting bolt f220.

In a further embodiment, the adjusting link f200 further includes a connecting block f230. Both ends of the connecting block f230 are respectively connected to the adjusting shaft f210 through connecting holes. At least one of the connecting holes provided at both ends is a strip-shaped hole f231. An extension direction of the strip-shaped hole f231 is aligned with an adjusting direction of the adjusting link f200. The arrangement of the strip-shaped hole f231 can allow the position relationship of the connecting block f230 relative to the adjusting shaft f210 to change, so as to adapt to the adjusting function of the adjusting link f200. The arrangement of the connecting block f230 can provide a limiting effect for the adjustment of the adjusting link f200, and can set the maximum length and minimum length of the adjusting link f200. At the same time, the connecting block f230 can also play a protective role. When the bolt slips or disconnects, the adjusting link f200 can prevent the two adjusting shafts f210 from separating, thereby improving the safety and stability of the fixing member.

In a further embodiment, there can be two connecting blocks f230, which are respectively located on both sides of the adjusting link f200 and at both ends of the two adjusting shafts f210, providing a more stable fixed connection effect for the adjusting shaft f210. The two connecting blocks f230 can also prevent the two adjusting shafts f210 from rotating relative to each other around the adjusting bolt f220 as an axis. There can also be four connecting blocks f230, which are stacked in pairs and respectively located on both sides of the adjusting link f200. The connecting blocks f230 in contact with the adjusting shaft f210 can be made of wear-resistant and self-lubricating materials to reduce the rotational resistance between the adjusting link f200 and the adjacent fixing frame f100. The connecting blocks f230 not in contact with the adjusting shaft f210 can be made of high-strength materials to further ensure the stable connection of the two adjusting shafts f210, as shown in FIG. 8.

In a further embodiment, when the adjustable connection of the adjusting bolt f220 is to pass through one adjusting shaft f210 and be threadedly connected to the other adjusting shaft f210, the adjusting link f200 further includes an adjusting handle f240. The adjusting handle f240 is provided at an opposite end of one end where the adjusting bolt f220 is threadedly connected to the adjusting shaft f210, so that the user can rotate the adjusting bolt f220 by screwing the adjusting handle f240.

As shown in FIG. 9 and FIG. 10, the structure of the fixing frame f100 in the fixing member is disclosed in an embodiment. The fixing frame f100 includes a first structural block f110 and a second structural block f120. One end of the first structural block f110 and one end of the second structural block f120 are secured to each other to form the fixing frame f100, and an opposite end of the first structural block f110 and an opposite end of the second structural block f120 are connected to the adjusting link f200. The first structural block f110 and the second structural block f120 are oriented at an angle, and inner sides of the first structural block f110 and the second structural block f120 respectively form the fixing planes f101. The fixing frame f100 is formed by connecting the two structural blocks to each other, and the strip-shaped first structural blocks f110 and second structural blocks f120 can be processed during manufacturing, and then combined at a certain angle to form the fixing frame f100. There is no need to integrally form the fixing frame f100, nor is there any need to process the fixing plane f101 on the fixing frame f100, thereby reducing the processing cost of the fixing frame f100. At the same time, the fixing frame f100 is formed by combining the first structural block f110 and the second structural block f120. When the fixing member needs to be replaced to be fixed to a frame f900 whose size exceeds the adjustable range of the adjusting link f200, the first structural block f110 or the second structural block f120 of different lengths can be replaced, thereby making the fixing member adaptable to frames f900 of more types and sizes.

In a further embodiment, as shown in FIG. 10, a first notch f111 is provided at an end portion of the first structural block f110, and a second notch f121 is provided at an end portion of the second structural block f120. The first notch f111 and the second notch f121 are alternately configured in a complementary manner. The first structural block f110 and the second structural block f120 are fixed by inserting into each other through the first notch f111 and the second notch f121, which can improve the connection stability between the first structural block f110 and the second structural block f120. After being inserted into each other, the first structural block f110 and the second structural block f120 can be fixed by gluing, welding, or riveting, which is not limited in the embodiment.

In a further embodiment, the first structural block f110 and the second structural block f120 are both provided with a fixing through hole f131 at one end with a notch. When the first structural block f110 and the second structural block f120 are inserted into each other, the fixing through holes f131 are aligned. At this time, the first structural block f110 and the second structural block f120 can be fixedly connected by inserting a fixing pin f132.

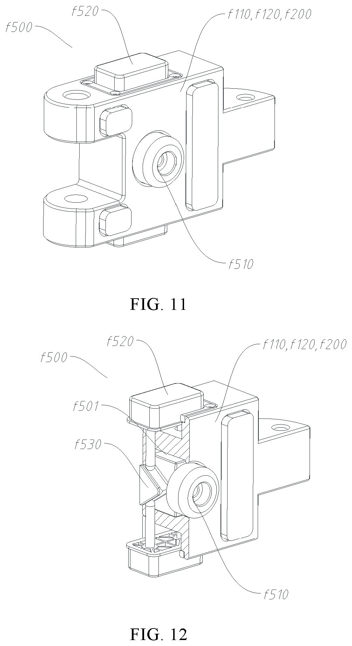

As shown in FIG. 11 and FIG. 12, a temporary fastening assembly f500 in the fixing member is disclosed in an embodiment. The temporary fastening assembly f500 is located on the inner side of the annular structure f102, and can apply an inward elastic force or elastically protrude inward, thereby interacting with the frame f900 to generate an elastic force. The elastic force can enhance an interaction force between the fixing member and the frame f900 or between the fixing frame f100 and the frame f900. When the fixing member is unfastened, the interaction force enables the fixing member to remain in place on the frame f900, improving the stability and safety of the fixing member. It should be noted that the temporary fastening assembly f500 elastically protruding inward not only includes the effect achieved by the elastic force, but also includes the assembly protruding inward by magnetic force.

In a further embodiment, the temporary fastening assembly f500 includes a mounting groove f501 opened on the inner side of the annular structure f102, an elastic block f510 disposed in the mounting groove f501 and elastically protruding toward the outside of the mounting groove f501, and an unlocking block f520 linked with the elastic block f510. When the user does not operate the unlocking block f520, the elastic block f510 naturally elastically protrudes toward the outside of the mounting groove f501, thereby generating a preloading elastic force between the annular structure f102 and the frame f900. When the user needs to release the preloading force, for example, when the user needs to significantly adjust the position of the fixing member on the frame f900, the unlocking block f520 can be pressed to retract the elastic block f510 into the mounting groove f501, releasing the contact between the elastic block f510 and the frame f900. At this time, the user can more easily slide the fixing member along the frame f900. After the user completes the position adjustment and releases the unlocking block f520, the elastic block f510 recovers and provides a preloading elastic force, completing the adjustment of the position of the fixing member on the frame f900. The mounting groove f501 can be opened on the fixing member in the annular structure f102, as shown in FIG. 12, or can be opened on the adjustable link (not shown in the figure).

In a further embodiment, the unlocking block f520 can be provided on an upper side or a lower side of the annular structure f102, and a movement direction of the unlocking block f520 is an up-down direction. The up-down direction is based on a direction of movement of the fixing member along the frame f900. The unlocking block f520 is provided on the upper or lower side of the fixing member, and the movement direction of the unlocking block f520 is along the up-down direction. When the user grasps the fixing member, the unlocking block f520 can be naturally pressed, thereby improving the user experience.

In a further embodiment, unlocking blocks f520 can also be provided on the upper and lower sides of the annular structure f102, and both of the two unlocking blocks f520 are linked with the elastic block f510, and the movement directions of the two unlocking blocks f520 are both the up-down direction. When the user grips the fixing member through the upper and lower sides, force can be applied through the unlocking blocks f520 at the same time, thereby driving the elastic block f510 to retract, further reducing the force required for the user to press the unlocking blocks f520, making it easier for the user to operate the unlocking block f520.

In a further embodiment, as shown in FIG. 12, a wedge structure f530 is provided on one end of the elastic block f510 connected to the unlocking block f520. When the unlocking block f520 is pressed, the unlocking block f520 can drive the elastic block f510 to retract into the mounting groove f501 via the wedge structure f530. At the same time, after the unlocking block f520 is released, an elastic force of the elastic block f510 can also drive the unlocking block f520 to reset through the wedge structure f530, thereby realizing the linkage between the unlocking block f520 and the elastic block f510. Two wedge structures f530 are shown in FIG. 12, and the upper and lower unlocking blocks f520 are respectively linked with the elastic block f510 through the two wedge structures f530. Of course, there are alternative solutions to this embodiment, such as arranging the wedge structure f530 on the unlocking block f520, or arranging the wedge structure f530 on both the elastic block f510 and the unlocking block f520. Regardless of the solution, those having ordinary skill in the art can understand that any of the above arrangements of the wedge structure f530 can realize the linkage between the elastic block f510 and the unlocking block f520, and after the user releases the unlocking block f520, the elastic force of the elastic block f510 can reset the elastic block f510 and the unlocking block f520.

The elastic block f510 can be biased inward by a spring disposed in the mounting groove f501 or by a permanent magnet disposed in the mounting groove f501, which is not limited in the present disclosure. At this time, an opening of the mounting groove f501 has a limiting mechanism for preventing the elastic block f510 from falling off from the mounting groove f501. Similarly, an elastic force can also be provided by elastic structures such as a torsion spring or a spring strip.

As shown in FIG. 13, FIG. 14, and FIG. 15, an embodiment demonstrates the use process of a fixing member.

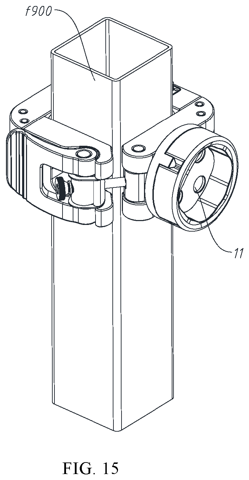

First, the fixing member is opened via a quick-release structure or a detachable fastening structure, and is sleeved on the frame f900, as shown in FIG. 13. After sleeving, the quick-release cam f330 or the fastening cam f430 can be seated on the fixing hook f310 or the fixing groove f410, that is, the quick-release structure f300 or the detachable fastening structure f400 is configured to connect the disconnected parts of the fixing member to each other to form an annular structure f102 sleeved on the frame f900, as shown in FIG. 14. At this time, the length of the adjusting link f200 and the angle formed between the adjusting link f200 and the fixing frame f100 can be adjusted by the adjusting handle f240, so that the shape of the fixing member fits the frame f900 as much as possible, and the gap between the fixing member and the frame f900 is minimized. At the same time, in this case, the user can release the temporary locking of the fixing member on the frame f900 by pressing the unlocking block f520 of the temporary fastening assembly f500, thereby adjusting the specific position of the fixing member moving along the up-down direction on the frame f900. Finally, as shown in FIG. 15, when the adjustment is completed, move the quick-release handle or the fastening handle f440 to lock the fixing member, completing the stable connection of the fixing member on the frame f900. At this time, the fitness device can be fixed on the first coupling seat f11.

In the description of this specification, reference to terms such as "an embodiment", "some embodiments", "exemplary embodiments", "example", "specific example", or "some examples" means that specific features, structures, materials, or characteristics described in conjunction with the embodiment or example are included in at least one embodiment or example of the present disclosure. In this specification, the schematic expressions of the above terms do not necessarily refer to the same embodiment or example. Moreover, the specific features, structures, materials, or characteristics described may be combined in any suitable manner in any one or more embodiments or examples.

Although the embodiments of the present disclosure have been shown and described, those having ordinary skill in the art will appreciate that various changes, modifications, substitutions, and variations may be made to the embodiments without departing from the principles and intent of the present disclosure, and the scope of the present disclosure is defined by the claims and their equivalents.

## Claims

1. A fixing member, comprising:
two fixing frames (f100), wherein each of the two fixing frames (f100) is formed with two fixing planes (f101) oriented at an angle, and the two fixing planes (f101) are located on a side of the fixing frame (f100) adjacent to the other fixing frame (f100); and
two adjusting links (f200), wherein the length of each of the two adjusting links (f200) is adjustable;
wherein when the fixing member is fastened, the fixing frames (f100) and the adjusting links (f200) are alternately hinged to form an annular structure (f102).

2. The fixing member according to claim 1, further comprising a quick-release structure (f300) located at a hinge of any fixing frame (f100) and any adjacent adjusting link (f200);
wherein when the fixing member is not fastened, the adjacent fixing frame (f100) and adjusting link (f200) provided with the quick-release structure (f300) are separable via the quick-release structure (f300).

3. The fixing member according to claim 2, wherein the quick-release structure (f300) is a quick-release rod (f370) connected to the fixing frame (f100) or the adjusting link (f200), and the quick-release rod (f370) is connected to a fixing hook (f310) provided on the adjusting link (f200) or the fixing frame (f100).

4. The fixing member according to claim 2, wherein the quick-release structure (f300) comprises a fixing hook (f310) and a connecting shaft (f320);
wherein one of the fixing hook (f310) and the connecting shaft (f320) is provided on the fixing frame (f100), and the other is provided on the adjusting link (f200), and the connecting shaft (f320) is configured to be seated on the fixing hook (f310).

5. The fixing member according to claim 4, wherein the quick-release structure (f300) comprises:
a quick-release cam (f330), wherein the quick-release cam (f330) is rotatably disposed on the connecting shaft (f320) and is configured to be seated on the fixing hook (f310), and the radius of the quick-release cam (f330) gradually increases along a rotation direction; and
a rotating handle (f340) connected to the quick-release cam (f330).

6. The fixing member according to claim 5, wherein the quick-release structure (f300) comprises a gasket (f350) located outside the quick-release cam (f330);
wherein the gasket (f350) is floatingly connected to the connecting shaft (f320), and the gasket (f350) is made of copper;
wherein the gasket (f350) is connected to a floating frame (f360), the floating frame (f360) is provided with a floating hole (f361), and the connecting shaft (f320) passes through the floating hole (f361).

7. The fixing member according to claim 1, wherein the adjusting link (f200) comprises:
two adjusting shafts (f210), wherein the two adjusting shafts (f210) are respectively rotatably connected to the two fixing frames (f100); and
an adjusting bolt (f220) adjustably connected to the two adjusting shafts (f210);
wherein the adjustable connection between the adjusting bolt (f220) and the two adjusting shafts (f210) comprises the adjusting bolt (f220) passing through one adjusting shaft (f210) and being threadedly connected to the other adjusting shaft (f210), or
the adjusting bolt (f220) passing through the two adjusting shafts (f210) and being threadedly connected to an adjusting handle (f240).

8. The fixing member according to claim 7, wherein the adjusting link (f200) further comprises a connecting block (f230);
wherein both ends of the connecting block (f230) are respectively connected to the adjusting shaft (f210) through connecting holes, at least one of the connecting holes provided at both ends is a strip-shaped hole (f231), and an extension direction of the strip-shaped hole (f231) is aligned with an adjusting direction of the adjusting link (f200);
wherein there are at least two connecting blocks (f230), which are respectively located on both sides of the adjusting link (f200); or
there are at least four connecting blocks (f230), which are stacked in pairs and respectively located on both sides of the adjusting link (f200).

9. The fixing member according to claim 7, wherein when the adjusting bolt (f220) passes through one adjusting shaft (f210) and is threadedly connected to the other adjusting shaft (f210), the adjusting link (f200) is further secured to an adjusting handle (f240), and the adjusting handle (f240) is provided at an end of the adjusting bolt (f220) opposite to an end where the adjusting bolt (f220) is threadedly connected to the adjusting shaft (f210).

10. The fixing member according to claim 8, wherein the fixing frame (f100) comprises a first structural block (f110) and a second structural block (f120);
wherein one end of the first structural block (f110) and one end of the second structural block (f120) are secured to each other to form the fixing frame (f100), and an opposite end of the first structural block (f110) and an opposite end of the second structural block (f120) are connected to the adjusting link (f200);
wherein the first structural block (f110) and the second structural block (f120) are oriented at an angle, and inner sides of the first structural block (f110) and the second structural block (f120) respectively form the fixing planes (f101).

11. The fixing member according to claim 10, wherein a first notch (f111) is provided at an end portion of the first structural block (f110), and a second notch (f121) is provided at an end portion of the second structural block (f120);
wherein the first notch (f111) and the second notch (f121) are alternately configured in a complementary manner, and the first structural block (f110) and the second structural block (f120) are inserted into each other through the first notch (f111) and the second notch (f121).

12. The fixing member according to claim 11, wherein the first structural block (f110) and the second structural block (f120) are both provided with a fixing through hole (f131) at one end with a notch;
wherein when the first structural block (f110) and the second structural block (f120) are inserted into each other, the fixing through holes (f131) are aligned, and a fixing pin (f132) is inserted into the fixing through holes (f131).

13. The fixing member according to claim 1, further comprising:
a temporary fastening assembly (f500) located on an inner side of the annular structure (f102) and configured to apply an elastic force inward or elastically protrude inward;
wherein the temporary fastening assembly (f500) comprises:
an elastic block (f510) located in a mounting groove (f501) inside the annular structure (f102), the elastic block (f510) elastically protruding toward the outside of the mounting groove (f501); and
an unlocking block (f520) linked with the elastic block (f510) and configured to retract the elastic block (f510) into the mounting groove (f501).

14. The fixing member according to claim 13, wherein the unlocking block (f520) is located on an upper side or a lower side of the annular structure (f102), and a movement direction of the unlocking block (f520) is an up-down direction; or
there are two unlocking blocks (f520) respectively located on an upper side and a lower side of the annular structure (f102), both of the two unlocking blocks (f520) are linked with the elastic block (f510), and the movement direction of the unlocking block (f520) is an up-down direction.

15. The fixing member according to claim 13, further comprising at least one of the following features:
wherein at least one of a connecting end of the elastic block (f510) or a connecting end of the unlocking block (f520) is provided with a wedge structure (f530), and the elastic block (f510) and the unlocking block (f520) are linked via the wedge structure (f530);
wherein a spring is provided in the mounting groove (f501), the spring is configured to push the elastic block (f510) out of the mounting groove (f501), and a limiting mechanism is provided at an opening of the mounting groove (f501) to prevent the elastic block (f510) from falling off from the mounting groove (f501).
